Europäisches Patentamt

European Patent Office

Office européen des brevets

(19)

(11) **EP 1 136 795 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
*G01F 23/292* [(2006.01)]     *G01F 23/20* [(2006.01)]

(21) Anmeldenummer: **01250105.2**

(22) Anmeldetag: **23.03.2001**

(54) **Verfahren und Vorrichtung zur Füllstandsbestimmung für die Ermittlung des Siedeverlaufes von Mineralölerzeugnissen**

Method and device for the determination of a liquid level for determining the boiling curve of mineral oil products

Procédé et dispositif pour la détermination du niveau d'un liquide pour déterminer la courbe d'ébullition de produits pétroliers

(84) Benannte Vertragsstaaten:
**AT BE CH CY DE DK ES FI FR GB GR IE IT LI LU MC NL PT SE TR**

(30) Priorität: **23.03.2000 DE 10026394**

(43) Veröffentlichungstag der Anmeldung:
**26.09.2001 Patentblatt 2001/39**

(73) Patentinhaber: **Petrotest Instruments GmbH & Co. KG**
**15827 Dahlewitz (DE)**

(72) Erfinder: **Handschuck, Bernhard**
**12203 Berlin (DE)**

(74) Vertreter: **Hengelhaupt, Jürgen et al**
**Anwaltskanzlei**
**Gulde Hengelhaupt Ziebig & Schneider**
**Wallstrasse 58/59**
**10179 Berlin (DE)**

(56) Entgegenhaltungen:
**EP-A- 0 276 377     US-A- 4 703 314**

EP 1 136 795 B1

**Beschreibung**

Die Erfindung betrifft ein Verfahren und eine Vorrichtung zur Füllstandsbestimmung und ist anwendbar insbesondere für die Ermittlung des Siedeverlaufes von Mineralölerzeugnissen.

Bei der Bestimmung des Siedeverlaufes von Mineralölerzeugnissen wird eine bestimmte Probemenge in einem Siedekolben unter vorgegebenen Bedingungen erhitzt und über ein Kühlrohr wieder kondensiert. Die kondensierte Menge wird in einem Messzylinder aufgefangen und die Abhängigkeit des Volumen-Zuwachses oder des Gewichtszuwachses zur dabei jeweils herrschenden Temperatur im Siedekolben ermittelt (siehe z.B. GB 1 468 548 A).

Die Darstellung der Temperatur zur aufgefangenen Flüssigkeitsmenge gibt Rückschlüsse auf die Zusammensetzung und Verwendbarkeit des destillierten Materials und ist international genormt. Sie findet insbesondere in Raffinerien Anwendung zur Überprüfung der Kraftstoffe.

Dieser Destillier Testablauf wurde ursprünglich manuell durchgeführt; heute bedient man sich aufgrund der Zeitersparnis vorwiegend entsprechender Automaten. Dabei wird üblicherweise die Oberfläche der aufzufangenden Flüssigkeit im Messzylinder über eine mitlaufende Lichtschranke in ihrer Höhe ermittelt und damit als Volumen ausgewiesen. Es handelt sich hierbei um eine Lösung, bei der die Lichtschranke motorgetrieben dem stetig steigenden Flüssigkeitspegel im Messzylinder geregelt folgt. Für den gleichen zweck werden auch ortsfest angeordnete Lichtschranken verwendet (siehe z.B. GB 1 296 507 A und GB 943 009 A.)

Der Erfindung liegt die Aufgabe zugrunde, ein Verfahren und eine Vorrichtung zu schaffen, welche ohne die Verwendung von beweglichen Teilen die Realisierung einer preiswert herstellbaren und zuverlässig arbeitenden Messanordnung ermöglichen.

Diese Aufgabe wird gelöst durch die Merkmale in den Ansprüchen 1, 3, 6 und 7. Zweckmäßige Ausgestaltungen der Erfindung sind in den Unteransprüchen enthalten.

Ein Vorteil der Erfindung besteht darin, dass zur Füllstandsbestimmung keine beweglichen Teile erforderlich sind. Dies wird dadurch realisiert, dass mittels mindestens zweier feststehender Sensoren eine erste Füllhöhe (Pegel 1) und mindestens eine zweite Füllhöhe (Pegel 2) definiert und die zum Erreichen des Pegels 1 und 2 notwendige Anzahl von Tropfen erfasst wird, über einen weiteren Sensor die Anzahl der im Siedeverlauf eingetropften Tropfen gezählt wird und durch Berechnung das hinzugekommene Teilvolumen und der Füllstand bestimmt wird oder mittels der feststehenden Sensoren die erste Füllhöhe (Pegel 1) und mindestens die zweite Füllhöhe (Pegel 2) definiert und das zum Erreichen des Pegels 1 und 2 notwendige Gewicht erfasst wird, das im Siedeverlauf hinzugekommene Gewicht gemessen wird und wiederum durch Berechnung das hinzugekommene Teilvolumen und der Füllstand bestimmt wird.

Eine preiswert herstellbare, einfach zu bedienende und zu wartende Vorrichtung wird dadurch realisiert, dass zur Pegelerfassung in einem Messzylinder in einer Messanordnung ein erster feststehender Messsensor und mindestens ein zweiter feststehender Messsensor sowie ein Zählsensor angeordnet ist, wobei die Positionen der Messsensoren ein definiertes Verhältnis zum Füllstand im Messzylinder repräsentieren und der Zählsensor die Anzahl der im Siedeverlauf eingetropften Tropfen erfasst.

Ebenso ist es möglich, anstelle der Tropfenzählung eine Erfassung des hinzukommenden Gewichtes vorzunehmen, wobei zur Pegelerfassung in dem Messzylinder in der Messanordnung wiederum ein erster feststehender Sensor und mindestens ein zweiter feststehender Sensor angeordnet ist und die Positionen der Sensoren ein definiertes Verhältnis zum Füllstand im Messzylinder darstellen und der Messzylinder mit Mitteln zur Erfassung des Gewichtes verbunden ist.

Die Erfindung soll nachstehend anhand von zumindest teilweise in den Figuren dargestellten Ausführungsbeispielen näher erläutert werden.

Es zeigen:

Fig. 1    Eine Messanordnung für die Erfassung der Füllstandshöhe mittels Lichtschranken

Fig. 2    Eine Prinzipdarstellung des Messaufbaus gemäss dem Stand der Technik

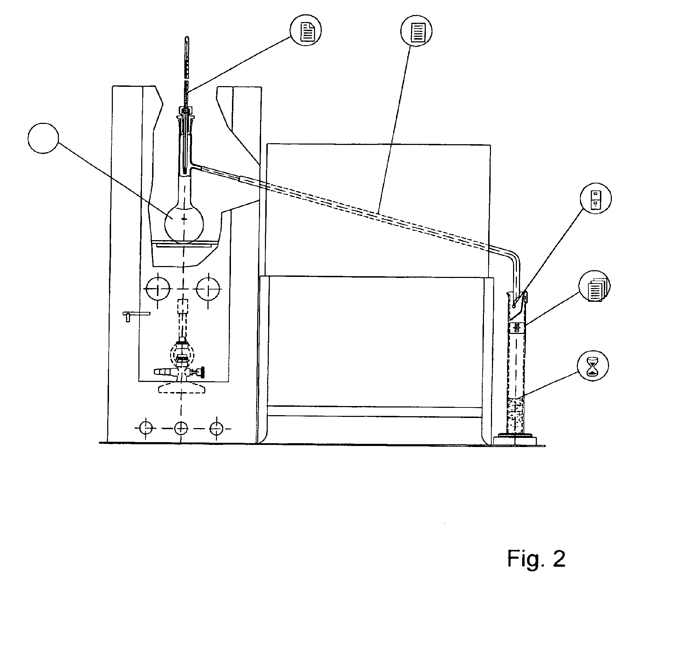

Wie in Fig. 2 dargestellt, wird bei der Bestimmung des Siedeverlaufes von Mineralölerzeugnissen eine bestimmte Probemenge in einem Siedekolben 1 unter vorgegebenen Bedingungen erhitzt und über ein Kühlrohr 3 wieder kondensiert. Die kondensierte Menge wird in einem Messzylinder 4 aufgefangen und die Abhängigkeit des Volumen-Zuwachses zur dabei jeweils herrschenden Temperatur 2 im Siedekolben ermittelt.

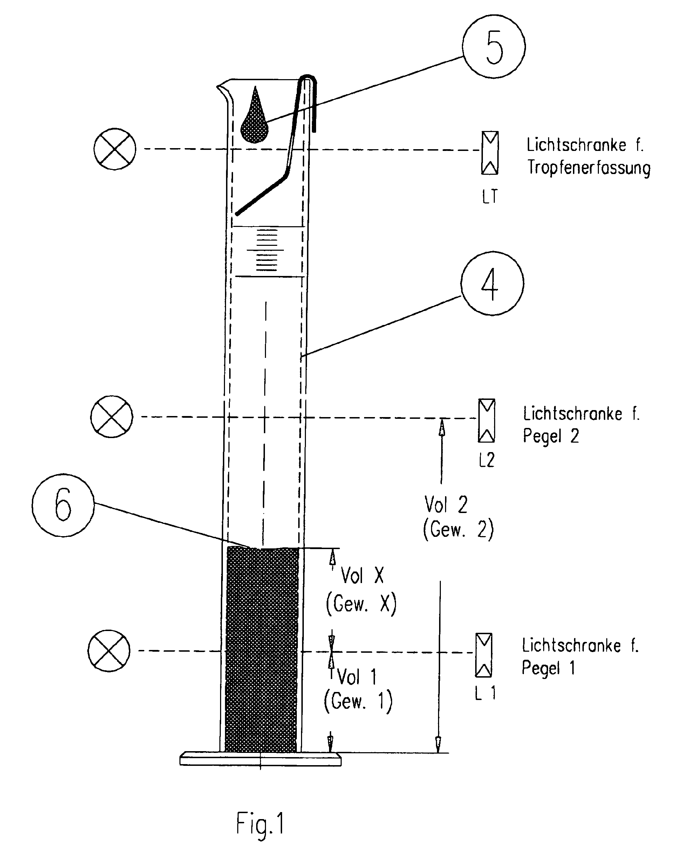

Gemäss der in Fig. 1 dargestellten Ausführungsform der Erfindung werden mindestens zwei Lichtschranken L1, L2 angeordnet, die einmalig kalibriert (Volumen/Füllhöhe) werden, so dass deren Position ein festes und bekanntes Verhältnis zum jeweiligen Füllungsgrad des Messzylinders 4 darstellen.

Sollen Flüssigkeitspegel 6 jeweils zwischen beiden Lichtschranken-Positionen ermittelt werden, so muss dies durch Interpolation unter Einbezug einer weiteren Bezugsgröße geschehen.

Hierfür wird nun gemäss dieser Ausführungsform der Erfindung die Anzahl der passierenden Tropfen 5 herangezogen, die über eine weitere Lichtschranke LT ermittelt wird. Für die Zuordnung zum eingetropften Volumen 6 werden die Tropfen 5 gezählt und das Teil-Volumen an der Stelle x zwischen zwei kalibrierten Marken L1 - L2 anteilig ermittelt. Es gilt folgende Relation:

$$\frac{Vol_2 - Vol_1}{Tropfen_2 - Tropfen_1} = \frac{Vol_x}{Tropfen_x}$$

Daraus ergibt sich:

$$Vol_x = \frac{(Vol_2 - Vol_1) * Tropfen_x}{Tropfen_2 - Tropfen_1}$$

Für die kalibrierbare Grob-Erfassung der Füllhöhen, welche den Positionen von L1 und L2 entspricht, sind auch den Lichtschranken ähnlich wirkende Sensoren einsetzbar, wie Schalter, Druckschalter, Näherungselemente (z.B. unter Zuhilfenahme metallischer Schwimmkörper) oder eigenerwärmte Temperaturfühler.

In einer zweiten Ausführungsvariante der Erfindung wird anstelle des Einsatzes der Lichtschranke LT eine Waage unter den Messzylinder gesetzt oder es werden Gewichtssensoren geeignet angeordnet. So können die gemessenen Massen beim Passieren von Gew.1 bzw. Gew.2 auf das entsprechende Volumen in der gleichen Weise, wie für das Lichtschranken-Ausführungsbeispiel umgerechnet werden.

Dann ergibt sich:

$$Vol_x = \frac{(Vol_2 - Vol_1) * Gewicht_x}{Gewicht_2 - Gewicht_1}$$

Ist das Volumen / Gewicht nicht über die gesamte Menge konstant, so werden zur Linearisierung entsprechend mehr Kalibrierpunkte (L3, L4...) (Gewichte Gewicht$_4$) vorgesehen.

Da der Messzylinder gemäß den geltenden Normen unterschiedlich temperiert wird ist beim Einsatz von Lichtschranken darauf zu achten, dass die Glasoberfläche des Messkolbens 4 durch Kondensatbildung nicht blind wird und dass die Temperierung desselben möglichst schnell erfolgt. Dieses wird üblicherweise in einer Temperierkammer vorgenommen.

Gemäss einer zweckmäßigen Ausführungsform der Erfindung wird eine dem Messzylinder 4 weitgehend angepasste Temperierkammer in Form eines Blockes angeordnet. Durch den sehr kleinen Luftraum um den Messzylinder wird die Kondensatbildung vermieden und es lassen sich auch schnell Temperaturen wechseln. Der Block und damit der Messzylinder 4 wird direkt oder indirekt, z.B. über Flüssigkeit, temperiert.

**Patentansprüche**

1. Verfahren zur Füllstandsbestimmung für die Ermittlung des Siedeverlaufes von Mineralölerzeugnissen, bei dem mittels mindestens zweier feststehender Sensoren ($L_1$, $L_2$) eine erste Füllhöhe und mindestens eine zweite Füllhöhe definiert werden, **dadurch gekennzeichnet, dass** die zum Erreichen der ersten und der zweiten Füllhöhe notwendige Anzahl von Tropfen erfasst wird, über einen weiteren Sensor (LT) die Anzahl der im Siedeverlauf eingetropften Tropfen gezählt wird und durch Berechnung unter Einbeziehung der Anzahl der gezählten Tropfen das hinzugekommene Teilvolumen ($Vol_x$) und der Füllstand bestimmt werden.

2. Verfahren nach Anspruch 1, **dadurch gekennzeichnet, dass** das hinzugekommene Teilvolumen ($Vol_x$) durch folgende Formel berechnet wird:

$$Vol_x = \frac{(Vol_2 - Vol_1) * Tropfen_x}{Tropfen_2 - Tropfen_1}$$

**3.** Verfahren zur Füllstandsbestimmung für die Ermittlung des Siedeverlaufes von Mineralölerzeugnissen, bei dem mittels mindestens zweier feststehender Sensoren ($L_1$, $L_2$) eine erste Füllhöhe und mindestens eine zweite Füllhöhe definiert werden, **dadurch gekennzeichnet, dass** das zum Erreichen der ersten und der zweiten Füllhöhe notwendige Gewicht erfasst wird, das im Siedeverlauf hinzugekommene Gewicht gemessen wird und durch Berechnung unter Einbeziehung des gemessenen hinzugekommenen Gewichtes das hinzugekommene Teilvolumen ($Vol_x$) und der Füllstand bestimmt werden.

**4.** Verfahren nach Anspruch 3, **dadurch gekennzeichnet, dass** das hinzugekommene Teilvolumen ($Vol_x$) durch folgende Formel berechnet wird:

$$Vol_x = \frac{(Vol_2 - Vol_1) * Gewicht_x}{Gewicht_2 - Gewicht_1}$$

**5.** Verfahren nach Anspruch 1 oder 4, **dadurch gekennzeichnet, dass** die Füllstandsbestimmung in einem temperierten Messzylinder (4) erfolgt.

**6.** Vorrichtung zur Füllstandsbestimmung für die Ermittlung des Siedeverlaufes von Mineralölerzeugnissen, bei der zur Pegelerfassung in einem Messzylinder (4) in einer Messanordnung ein erster feststehender Sensor (L1) und mindestens ein zweiter feststehender Sensor (L2) angeordnet sind, **dadurch gekennzeichnet, dass** in der Messanordnung zusätzlich ein Zählsensor (LT) angeordnet ist, wobei die Positionen der Sensoren (L1,L2) ein definiertes Verhältnis zum Füllstand im Messzylinder (4) repräsentieren und der Zählsensor (LT) die Anzahl der im Siedeverlauf eingetropften Tropfen (5) erfasst, so **dass** durch Berechnung unter Einbeziehung der Anzahl der gezählten Tropfen das hinzugekommene Teilvolumen ($Vol_x$) und der Füllstand bestimmt werden. können.

**7.** Vorrichtung zur Füllstandsbestimmung für die Ermittlung des Siedeverlaufes von Mineralölerzeugnissen, bei der zur Pegelerfassung in einem Messzylinder (4) in einer Messanordnung ein erster feststehender Sensor (L1) und mindestens ein zweiter feststehender Sensor (L2) angeordnet sind, **dadurch gekennzeichnet, dass** die Positionen der Sensoren (L1, L2) ein definiertes Verhältnis zum Füllstand im Messzylinder (4) darstellen und der Messzylinder (4) mit Mitteln zur Erfassung des Gewichtes verbunden ist, so dass durch Berechnung unter Einbeziehung des erfassten hinzugekommenen Gewichtes das hinzugekommene Teilvolumen ($Vol_x$) und der Füllstand bestimmt werden können.

**8.** Vorrichtung nach Anspruch 6 oder 7, **dadurch gekennzeichnet, dass** die Sensoren (L1, L2) Lichtschranken und/ oder Schalter und/oder Näherungselemente sind.

**9.** Vorrichtung nach Anspruch 6 **dadurch gekennzeichnet, dass** der Zählsensor (LT) eine Lichtschranke umfasst.

**10.** Vorrichtung nach Anspruch 7 **dadurch gekennzeichnet, dass** die Mittel zur Erfassung des Gewichtes Waagen oder Gewichtssensoren sind.

**11.** Vorrichtung nach Anspruch 7 oder 8 **dadurch gekennzeichnet, dass** an dem Messzylinder (4) eine der Kontur des Messzylinders (4) weitgehend angepasste Temperierkammer in Form eines Blockes angeordnet ist.

**Claims**

**1.** Method for determining the filling level to determine the boiling curve of mineral oil products, wherein, by means of at two least stationary sensors (L1, L2) a first filling level and at least a second filling level are defined, **characterised in that** the number of drops required to reach the first and second filling level is recorded, by means of a further sensor (LT) the number of drops dropped in during the boiling curve are counted and, by means of calculation including the number of drops counted, the additional partial volume ($Vol_x$) and the filling level are determined.

2. Method according to claim 1, **characterised in that** the additional partial volume ($Vol_x$) is calculated by the following formula:

$$Vol_x = \frac{(Vol_2 - Vol_1) * Drop_x}{Drop_2 - Drop_1}$$

3. Method for determining the filling level to determine the boiling curve of mineral oil products, wherein, by means of at least two stationary sensors (L1, L2) a first filling level and at least a second filling level are defined and the weight required to reach the first and second filling level is recorded, the additional weight in the boiling curve is measured and, by means of calculation including the additional weight measured, the additional partial volume ($Vol_x$) and the filling level are determined.

4. Method according to claim 3, **characterised in that** the additional partial volume ($Vol_x$) is calculated by the following formula:

$$Vol_x = \frac{(Vol_2 - Vol_1) * Weight}{Weight_2 - Weight_1}$$

5. Method according to claim 1 or 4, **characterised in that**, the filling level determination is performed in a tempered measuring cylinder.

6. Device for determining the filling level to determine the boiling curve of mineral oil products, wherein, for the purpose of level recording in a measuring cylinder (4) in a measuring arrangement a first stationary sensor (L1) and at least a second stationary sensor (L2) are arranged, **characterised in that**, in the measuring arrangement, a metering sensor (LT) is also arranged, where the positions of the sensors (L1, L2) represent a defined relationship with the filling level in the measuring cylinder (4) and the metering sensor (LT) records the number of drops (5) dropped in during the boiling curve, such that, by means of calculation including the number of drops counted, the additional partial volume ($Vol_x$) and the filling level can be determined.

7. Device for determining the filling level to determine the boiling curve of mineral oil products, wherein, for the purpose of level recording in a measuring cylinder (4) in a measuring arrangement a first stationary sensor (L1) and at least a second stationary sensor (L2) are arranged, **characterised in that** the positions of the sensors (L1, L2) represent a defined relationship with the filling level in the measuring cylinder (4) and the measuring cylinder (4) is connected with means for recording the weight, such that, by means of calculation including the additional weight recorded, the additional partial volume ($Vol_x$) and the filling level can be determined.

8. Device according to claim 6 or 7, **characterised in that** the sensors (L1, L2) are light barriers and/or switches and/or proximity elements.

9. Device according to claim 6, **characterised in that** the metering sensor (LT) comprises a light barrier.

10. Device according to claim 7, **characterised in that** the means for recording the weight are scales or weight sensors.

11. Device according to claim 7 or 8, **characterised in that**, at the measuring cylinder (4) a tempering chamber in the form of a block is arranged, which is extensively adapted to the contour of the measuring cylinder (4).

**Revendications**

1. Procédé de détermination du niveau d'un liquide pour déterminer la courbe d'ébullition de produits pétroliers, dans lequel une première hauteur de liquide et au moins une seconde hauteur de liquide sont définies au moyen d'au moins deux capteurs fixes (L1, L2), **caractérisé en ce que** le nombre de gouttes nécessaire pour obtenir la première et la seconde hauteurs de liquide est détecté, le nombre de gouttes injectées dans la courbe d'ébullition est compté par un autre capteur (LT) et le volume partiel additionnel ($Vol_x$) et le niveau de liquide sont définis par un calcul incluant le nombre de gouttes comptées.

2. Procédé selon la revendication 1, **caractérisé en ce que** le volume partiel additionnel ($Vol_x$) est calculé par la formule suivante :

$$Vol_x = \frac{(Vol_2 - Vol_1) * goutte_x}{goutte_2 - goutte_1}$$

3. Procédé de détermination du niveau d'un liquide pour la détermination de la courbe d'ébullition de produits pétroliers, dans lequel une première hauteur de liquide et au moins une seconde hauteur de liquide sont définies au moyen d'au moins deux capteurs fixes (L1, L2), **caractérisé en ce que** le poids nécessaire pour obtenir la première et la seconde hauteur de liquide est détecté, le poids additionnel dans la courbe d'ébullition est mesuré et le volume partiel additionnel ($Vol_x$) et le niveau de liquide sont définis par un calcul incluant le poids additionnel mesuré.

4. Procédé selon la revendication 3, **caractérisé en ce que** le volume partiel additionnel ($Vol_x$) est calculé par la formule suivante :

$$Vol_x = \frac{(Vol_2 - Vol_1) * poids_x}{poids_2 - poids_1}$$

5. Procédé selon la revendication 1 ou 4, **caractérisé en ce que** la détermination d'un niveau de liquide s'effectue dans une éprouvette graduée tempérée (4).

6. Dispositif de détermination du niveau d'un liquide pour déterminer la courbe d'ébullition de produits pétroliers, dans lequel, pour détecter le niveau, un premier capteur fixe (L1) et au moins un second capteur fixe (L2) sont disposés dans une éprouvette graduée (4) d'un système de mesure, **caractérisé en ce qu'**un capteur compteur (LT) est disposé en plus dans le système de mesure, les positions des capteurs (L1, L2) représentant une proportion définie par rapport au niveau de liquide dans l'éprouvette graduée (4) et le capteur compteur (LT) détectant le nombre de gouttes (5) injectées dans la courbe d'ébullition, de sorte que le volume partiel additionnel ($Vol_x$) et le niveau de liquide peuvent être définis par un calcul incluant le nombre des gouttes comptées.

7. Dispositif de détermination du niveau d'un liquide pour déterminer la courbe d'ébullition de produits pétroliers, dans lequel, pour détecter le niveau, un premier capteur fixe (L1) et au moins un second capteur fixe (L2) sont disposés dans une éprouvette graduée (4) d'un système de mesure, **caractérisé en ce que** les positions des capteurs (L1, L2) représentent une proportion défini par rapport au niveau de liquide dans l'éprouvette graduée (4) et l'éprouvette graduée (4) est reliée à des moyens destinés à déterminer le poids, de sorte que le volume partiel additionnel ($Vol_x$) et le niveau de liquide peuvent être définis par un calcul incluant le poids additionnel détecté.

8. Dispositif selon la revendication 6 ou 7, **caractérisé en ce que** les capteurs (L1, L2) sont des barrières lumineuses et/ou des commutateurs et/ou des éléments capacitifs.

**9.** Dispositif selon la revendication 6, **caractérisé en ce que** le capteur compteur (LT) comporte une barrière lumineuse.

**10.** Dispositif selon la revendication 7, **caractérisé en ce que** les moyens destinés à détecter le poids sont une balance ou des capteurs de poids.

**11.** Dispositif selon la revendication 7 ou 8, **caractérisé en ce qu'**une chambre d'équilibrage de température sous forme d'un bloc, largement adaptée au contour de l'éprouvette graduée (4), est disposée sur l'éprouvette graduée (4).

⑤ — Lichtschranke f.
Tropfenerfassung

LT

④ — Lichtschranke f.
Pegel 2

L2

Vol 2
(Gew. 2)

⑥ — Vol X
(Gew. X)

Lichtschranke f.
Pegel 1

L 1

Vol 1
(Gew. 1)

Fig.1

Fig. 2